# EUROPEAN PATENT APPLICATION

(11) **EP 2 750 217 A1**
(43) Date of publication of application: **02.07.2014**
(21) Application number: 13198830.5
(22) Date of filing: 20.12.2013
(51) Int. Cl.: H01M 2/04, H01M 2/30, H01M 2/34, H01M 10/42

(54) **Battery pack**

(30) Priority: 26.12.2012 US 201261746027 P; 04.12.2013 US 201314097229
(71) Applicant: Samsung SDI Co., Ltd., Yongin-si, Gyeonggi-do (KR)
(72) Inventor: Lee, Sang-Joo, Gyeonggi-do (KR)
(74) Representative: Walaski, Jan Filip

(57) **Abstract**

A battery pack includes a bare cell, a protective circuit module, a top case and a terminal portion. The bare cell has a recess formed therein. The protective circuit module is positioned on a top surface of the bare cell. The top case is coupled to the bare cell so as to cover the protective circuit module. The terminal portion is extended from the top case and has one side soldered to the protective circuit module. In the battery pack, the recess is formed at a position corresponding to a solder portion formed by soldering the terminal portion to the protective circuit module. Accordingly, it is possible to provide a battery pack capable of maintaining its entire size while improving the safety of the battery pack by securing a sufficient interval between the solder portion and the bare cell through the recess.

## Description

The present invention relates to a battery pack.

Recently, secondary batteries have been variously used as power sources of portable electronic devices. As the portable electronic devices are used in various fields, demands on secondary batteries are rapidly increased. The secondary batteries can be charged/discharged a plurality of times, and accordingly are economically and environmentally efficient. Thus, the use of the battery packs is encouraged.

As the small size and light weight of electronic devices is required, the small size and light weight of secondary batteries is also required. However, since a material such as lithium having high reactivity is provided to the inside of the secondary battery, the small size and light weight of the secondary battery is limited due to the safety of the secondary battery. Accordingly, a variety of studies have been conducted to develop a secondary battery that can be implemented as a small and light battery pack while improving the safety of the secondary battery.

Embodiments provide a battery pack having improved safety while being in small in size and light in weight by employing a new structure.

According to an aspect of the present invention, there is provided a battery pack comprising a bare cell, a protective circuit board mounted to the bare cell and a terminal extending through the protective circuit board and having a connection portion where the terminal is connected to the protective circuit board, wherein the bare cell includes a recess at a position corresponding to the connection portion.

The battery pack may comprise a plurality of terminals each having a corresponding connection portion.

The recess may extend across all of the connection portions.

The bare cell may include a plurality of recesses, each recess corresponding to one of the connection portions.

The battery pack may further comprise an insulating member in the or each recess.

The bare cell may comprise a cap plate and the or each recess may be formed in the cap plate. The depth of the or each recess may be about 20% of the thickness of the cap plate.

The protection circuit board may be spaced apart from the upper surface of the cap plate.

The battery pack may further comprise a top case coupled to the bare cell and covering the protective circuit board. The or each terminal may be exposed through a corresponding opening formed in the top case.

The top case may be coupled to the bare cell via coupling members inserted through coupling holes in the ends of the top case, the coupling members engaging with openings in the cap plate.

The battery pack may further comprise a vent formed in a side wall of the bare cell.

The connection portion may comprise a solder portion.

The connection portion may protrude from the protective circuit board towards the recess.

Other features and advantages of the present invention will become more fully apparent from the following detailed description, taken in conjunction with the accompanying drawings.

According to the battery pack of the present invention, an avoidance portion, also referred to as a recess, is formed in a bare cell so as to correspond to a connection portion, for example, a solder portion formed by soldering a terminal portion to a protective circuit module, so that it is possible to implement the miniaturization of the battery pack while improving the safety of the battery pack by securing a sufficient spacing distance between the solder portion and the bare cell.

Further, an insulating member is positioned on the avoidance portion, so that it is possible to more effectively prevent an undesired short circuit between the solder portion and the bare cell.

The accompanying drawings, together with the specification, illustrate exemplary embodiments of the present invention, and, together with the description, serve to explain the principles of the present invention.
FIG. 1 is a perspective view of a battery pack according to an embodiment of the present invention;
FIG. 2 is an exploded perspective view of the battery pack shown in FIG. 1;
FIG. 3 is a sectional view of the battery pack taken along line A1-A1' of FIG. 1;
FIG. 4 is a sectional view of the battery pack taken along line B1-B1' of FIG. 1;
FIG. 5 is a sectional view showing a case where an insulating member is further positioned on a recess of the battery pack shown in FIG. 3;
FIG. 6 is a perspective view of a battery pack according to another embodiment of the present invention;
FIG. 7 is an exploded perspective view of the battery pack shown in FIG. 6;
FIG. 8 is a sectional view of the battery pack taken along line A2-A2' of FIG. 6; and
FIG. 9 is a sectional view of the battery pack taken along line B2-B2' of FIG. 6.

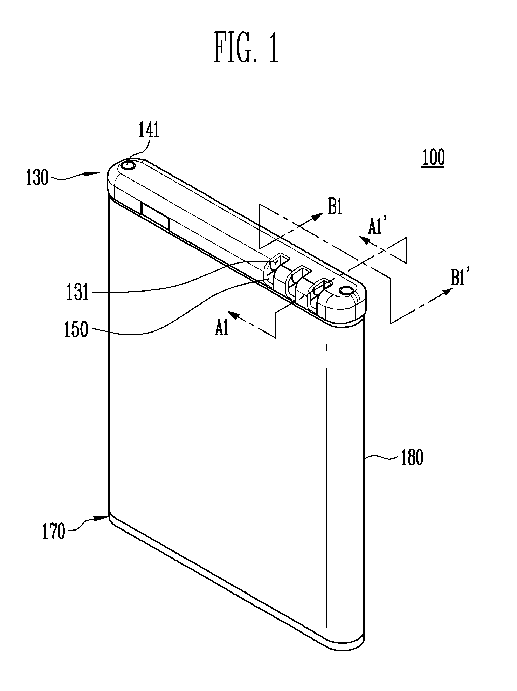

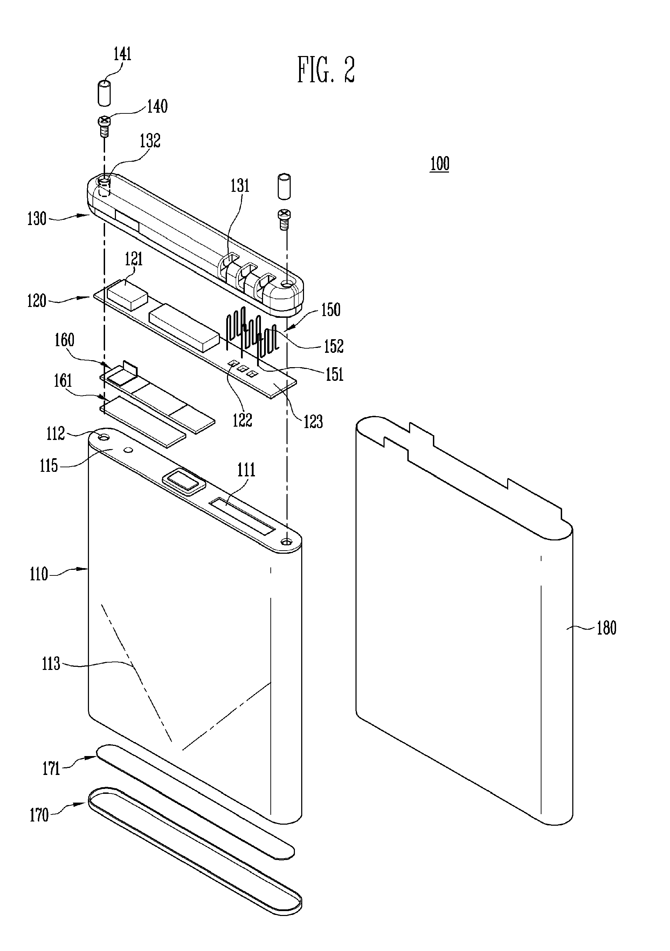

Hereinafter, the battery pack 100 according to one embodiment will be described with reference to FIGS. 1 and 2.

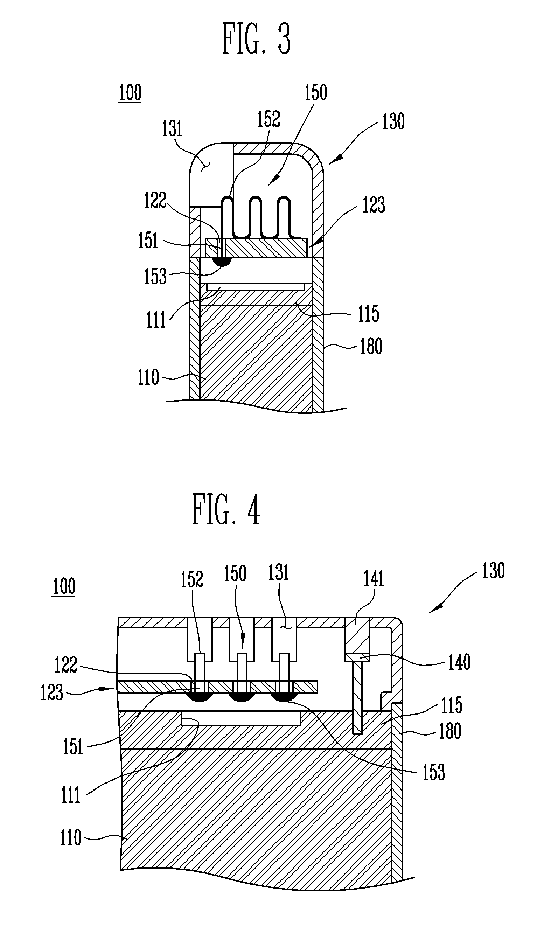

As shown in FIGS. 1 and 2, the battery pack 100 according to this embodiment includes a bare cell 110 having a recess 111 formed therein, a protective circuit module 120, a top case 130 covering the protective circuit module 120, and a terminal portion 150 soldered to the protective circuit module 120. The recess 111 may be formed at a position corresponding to a solder portion 153 (see FIGS. 3 and 4) formed by soldering the terminal portion 150 to the protective circuit module 120. The recess may also be referred to as a groove, for example an avoidance groove for avoiding contact between the bare cell and the solder portion.

The bare cell 110 is a member that generates electrochemical energy through the movement of ions or electrons.

The bare cell 100 may be manufactured by accommodating an electrode assembly together with an electrolyte in a battery case. Here, the electrode assembly is formed by winding a positive electrode plate, a negative plate and a separator interposed therebetween. The electrode assembly generates energy by an electrochemical reaction between the electrode assembly and the electrolyte, and the energy is supplied to the outside of the electrode assembly through an electrode tab, etc. For example, the battery case may be a pouch-type, prism-type or cylinder-type battery case.

The recess 111 may be formed in one surface of the bare cell 110. Here, the recess 111 may be formed in one surface of the bare cell 110 opposite to the protective circuit module 120. The recess 111 may have a shape recessed to have a predetermined depth from the one surface of the bare cell 110. The recess 111 may have a substantially uniform depth.

Meanwhile, a vent portion 113 may be further provided as a safety means in the bare cell 110. Here, the vent portion 113 serves as a passage along which gas generated inside the bare cell 110 is exhausted to the outside of the bare cell 110. The vent portion 113 may be formed on a surface adjacent to the surface in which the recess 111 is formed among the surfaces of the bare cell 110. When considering that the vent portion 113 is formed in a linear shape as shown in FIG. 2, the vent portion 113 may be preferably positioned on a wide surface among the side surfaces of the bare cell 110.

The protective circuit module 120 is a member positioned on the bare cell 110 so as to control voltage or current in charging and discharging of the bare cell 110.

The protective circuit module 120 may be implemented as a protective circuit board 123 having a circuit pattern formed thereon, and several electronic components 121 may be mounted on one surface of the protective circuit board 123. Here, the electronic components 121 may be a field effect transistor (FET), an integrated circuit IC, etc. The electronic components 121 may perform a function of controlling the electrode assembly in the bare cell 110 or cutting off a circuit in an abnormal operation of the electrode assembly. The circuit board 123 of the protective circuit module 120 may include a switching circuit to more efficiently control or protect the battery pack 100 together with the electronic components 121. Specifically, the protective circuit module 120 prevents overcharge, overdischarge, overcurrent, reverse voltage, etc., so that it is possible to prevent explosion, overheating and liquid leakage of the battery pack 100 and the deterioration of charging/discharging characteristics of the battery pack 100. Further, the protective circuit module 120 prevents the degradation of electrical performance and the abnormal operation of the battery pack 100, so that it is possible to eliminate risk factors and to extend the lifespan of the battery pack 100.

The protective circuit module 120 may be positioned opposite to the surface of the bare cell 110, in which the recess 111 is formed. A through-hole 122 may be formed in the protective circuit board 123, and one side 151 of the terminal portion 150 may penetrate the protective circuit board 123 through the through-hole 122.

The top case 130 is a member coupled to the bare cell 110 so as to cover the protective circuit module 120.

The top case 130 may be positioned to be coupled to the one surface of the bare cell 110, in which the recess 111 is formed. Thus, the recess 111, the protective circuit module 120 and the like cannot be exposed to the outside of the battery pack 100 by the top case 130. Meanwhile, an opening 131 may be formed in the top case 130, and the other side 152 of the terminal portion 150 may be exposed to the outside of the top case 130 through the opening 131. In this case, a plurality of openings 131 may be implemented according to the number of terminal portions 150. For example, in a case where the terminal portion 150 is configured with three terminal portions, there may be three openings 131.

The top case 130 may be coupled to the bare cell 110 through a coupling member 140. In this case, coupling grooves 112 may be formed at both sides of the bare cell 110, respectively, and coupling grooves 132 may be formed at both sides of the top case 130, respectively. The coupling grooves 112 and 132 are formed at positions corresponding to each other. The coupling member 140 is inserted into the coupling grooves 112 and 132, so that the bare cell 110 and the top case 130 can be coupled to each other. For example, a screw thread may be formed inside the coupling grooves 112 and 132, and the coupling member 140 may be implemented as a bolt to be screw-coupled in the coupling grooves 112 and 132. Meanwhile, a bonding member 141 covering a head portion of the coupling member 140 so that the coupling member 140 is not exposed to the outside may further be positioned at an upper portion of the coupling member 140.

The terminal portion 150 is a member that allows the battery pack 100 and an external device to be electrically connected.

The terminal portion 150 may be positioned on one surface, for example a top surface, of the protective circuit board 123, and the one side 151 of the terminal portion 150 may be soldered to the other surface, for example the bottom surface, of the protective circuit board 123 by passing through the through-hole 122 of the protective circuit board 123. Although the battery may be oriented in various ways, the top surface of the protective circuit board 123 is the surface that faces the top cap and the bottom surface is the surface that faces the bare cell. In this case, the one side 151 of the terminal portion 150 may be extended toward the recess 111 by passing through the through-hole 122 of the protective circuit board 123. The one side 151 of the terminal portion 150 may be positioned to be spaced apart from the recess 111. The one side 151 of the terminal portion 150 may be soldered to the bottom surface of the protective circuit board 123 so as to be electrically connected to the circuit pattern formed on that surface of the protective circuit board 123.

There may be a plurality of terminal portions 150, e.g., three. The one side 151 of the terminal portion 150 may be connected to the protective circuit board 123 through soldering, and the other side 152 of the terminal portion 150 may be exposed to the outside through the opening 131 formed in the top case 130. Thus, the external device is connected to terminal portion 150 exposed through the opening 131, so that the battery pack 100 and the external device can be electrically connected to each other.

Meanwhile, the shape of the terminal portion shown in these figures is merely an example, and the present invention is not limited thereto. That is, the terminal portion 150 may be implemented in various shapes known in the art.

The battery pack 100 may further include a protective element 160, a bottom case 170, a label 180, etc.

The protective element 160 is a member interposed between the protective circuit module 120 and the bare cell 110 so as to cut off current by increasing resistance when temperature increases. In order to perform such a function, the protective element 160 may use, for example, a positive temperature coefficient (PTC) element. The protective element 160 may be connected to the bare cell 110 through a protective element tape 161.

The bottom case 170 is a member coupled to a surface opposite to the surface of the bare cell 110, to which the top case 130 is coupled. The bottom case 170 is used to protect the bare cell 110. In this embodiment, the bottom case 170 may be coupled to the bare cell 110, for example, through an adhesive member 171.

The label 180 is a member that surrounds the side surface of the bare cell 110 to which the top case 130 and the bottom case 170 are coupled, so that it is possible to enhance the coupling among the top case 130, the bottom case 170 and the bare cell 110 and to protect the bare cell 110 from the outside. In this case, information on the battery pack 110, the manufacturer and the like may be recorded on the label 180.

FIG. 3 is a sectional view of the battery pack 100 taken along line A1-A1' of FIG. 1. FIG. 4 is a sectional view of the battery pack 100 taken along line B1-B1' of FIG. 1. Hereinafter, the relationship between the recess 111 and the solder portion 153 in the battery pack 100 according to this embodiment will be described in detail with reference to FIGS. 3 and 4.

As shown in FIGS. 3 and 4, the one side 151 of the terminal portion 150 may be soldered to the bottom surface of the protective circuit board 123 by passing through the through-hole 122 of the protective circuit board 123. As a result, the solder portion 153 protrudes from the bottom surface of the protective circuit board 123.

Since the solder portion 153 is implemented to protrude from the bottom surface of the protective circuit board 123, the solder portion 153 may come in direct contact with the bare cell 110 due to an external impact, etc. Therefore, it is important that a sufficient separate space should be formed between the solder portion 153 and the bare cell 110. Generally, the height of the separate space between the solder portion 153 and the bare cell 110 may be about 1.1mm. However, as the separate space between the solder portion 153 and the bare cell 110 increases, the size of the battery pack 100 may increase. If the size of the battery pack 100 does not increase, the size of the bare cell 110 is relatively decreased, and therefore, the capacity of the battery pack 100 may be reduced. Accordingly, it is required to propose a plan for ensuring a sufficient space between the solder portion 153 and the bare cell 110 while maintaining the entire size of the battery pack 100 and the capacity of the bare cell 110.

In this embodiment, the recess 111 is formed in the bare cell 110, thereby solving the problem described above. Specifically, if the recess 111 is formed at the position corresponding to the solder portion 153, in this case under the solder portion 153, a relatively large interval between the solder portion 153 and the bare cell 110 can be ensured, so that it is possible to decrease the possibility that the solder portion 153 and the bare cell 110 will come in contact with each other. Since the spacing between the solder portion 153 and the bare cell 110 other than at the recess 111 can be narrowed, there is no concern that the entire size of the battery pack 100 increases, and the capacity of the bare cell 110 can be maintained. In this case, the depth of the recess 111 may be 20% of the thickness of the cap plate 115. For example, when the thickness of the cap plate 115 is 1mm, the depth of the recess 111 may be 0.2mm. In other words, the gap between the circuit board 123 and the bare cell can be minimised while avoiding the risk of the solder portion 153 touching the bare cell, since a suitable gap can be provided between the bottom of the solder portion and the bottom of the recess.

Meanwhile, in this embodiment, a plurality of terminal portions 150 may be provided and a plurality of solder portions 153 may also be provided. Therefore, the solder portion may be positioned at the one side 151 of each terminal portion 150. The recess 111 may be implemented to have a size corresponding to the whole of the plurality of solder portions 153. For example, in a case where the solder portion 150 is configured with three solder portions, the recess 111 may be implemented to have a size capable of corresponding to the whole of the three solder portions 153. Thus, any solder portion 153 can be sufficiently spaced apart from the bare cell 110 by the recess 111.

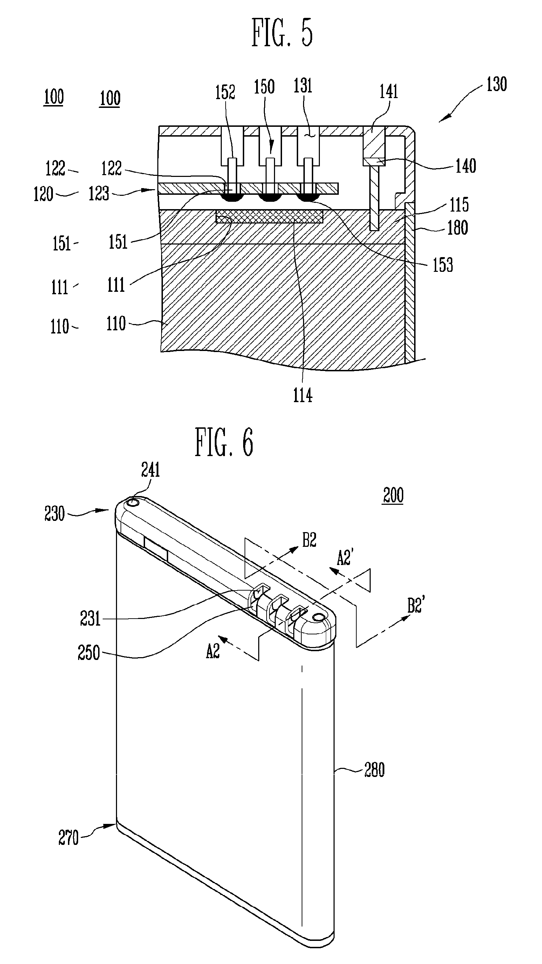

FIG. 5 is a sectional view showing a case where an insulating member 114 is further positioned on the recess 111 of the battery pack 100 shown in FIG. 3.

Referring to FIG. 5, the insulating member 114 may be further positioned on the recess 111, and accordingly, it is possible to more effectively prevent a short circuit between the terminal portion 150 and the bare cell 110. In this case, the insulating member 114 may be implemented by, for example, a single-faced or double-face tape, and the insulating member 114 may be arranged to fit into the recess 111.

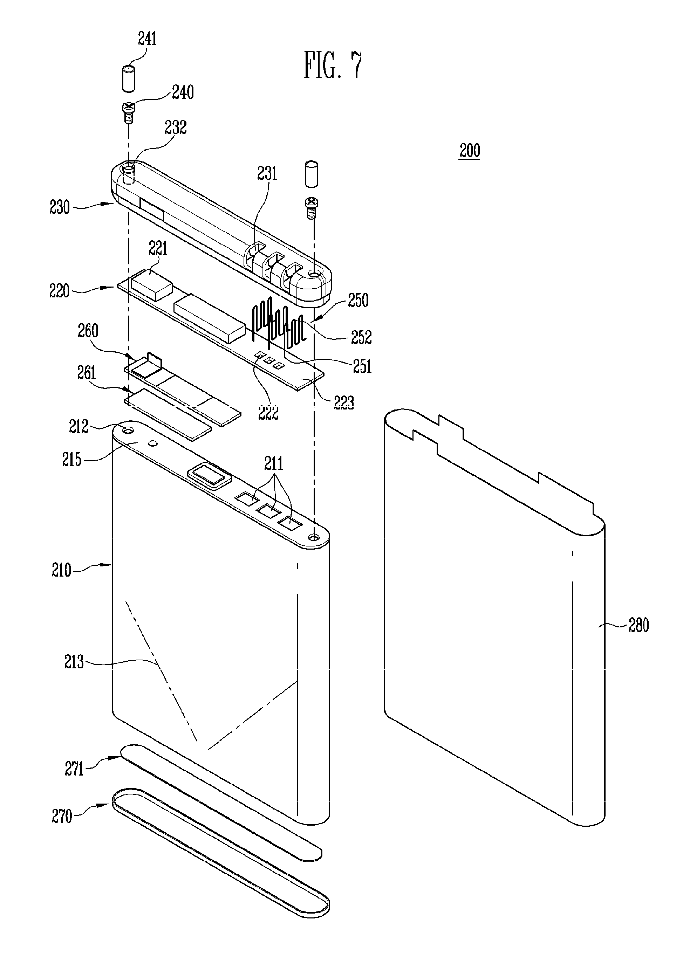

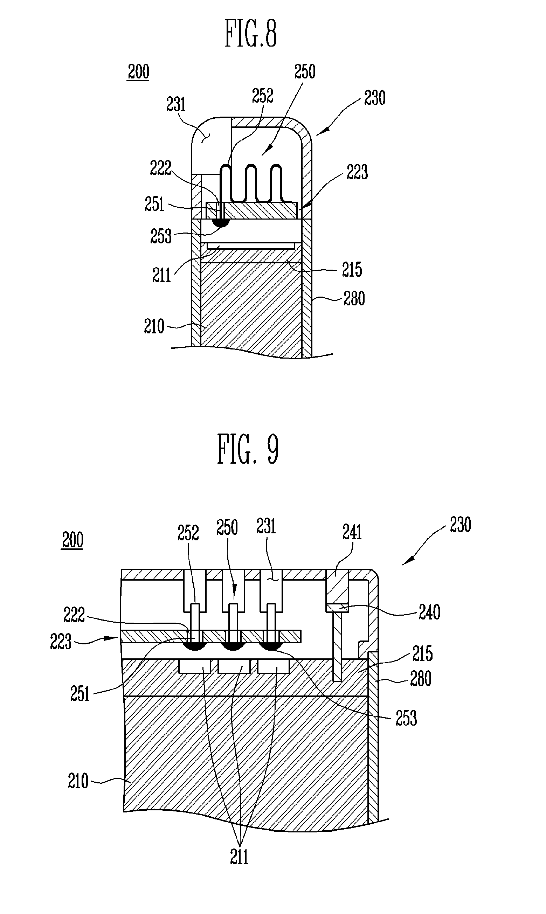

FIG. 6 is a perspective view of a battery pack 200 according to another embodiment of the present invention. FIG. 7 is an exploded perspective view of the battery pack 200 shown in FIG. 6. FIG. 8 is a sectional view of the battery pack 200 taken along line A2-A2' of FIG. 6. FIG. 9 is a sectional view of the battery pack 200 taken along line B2-B2' of FIG. 6.

Hereinafter, the battery pack 200 according to this embodiment will be described in detail with reference to FIGS. 6 to 9. The battery pack 200 according to this embodiment includes a bare cell 210 having a recess 211 formed therein, a protective circuit module 220, a top case 230 covering the protective circuit module 220, and a terminal portion 250 soldered to the protective circuit module 220. A plurality of recesses 211 may be formed, and the plurality of recesses may be respectively formed at positions corresponding to solder portions 253 (see FIGS. 8 and 9) formed by soldering the terminal portion 250 to the protective circuit board 223 of the protective circuit module 220. For example, the recesses are formed under the solder portions in the view shown in Figures 8 and 9.

That is, the recess 211 of the battery pack 200 according to this embodiment is not implemented as one large recess, like the recess 111 shown in FIG. 2, but implemented as a plurality of recesses so that the plurality of recesses correspond to the plurality of solder portions 253, respectively. For example, in a case where the solder portion 253 is configured with three solder portions, the recess 211 may also be configured with three recesses so that the recesses correspond to the respective solder portions 253. In this embodiment, in a case where the recesses 211 are implemented to correspond to the respective solder portions 253, the alignment reference can be set when the top case 230 is mounted to the bare cell 210, in addition to the prevention of a short circuit between the solder portion 253 and the bare cell 210, the prevention of an increase in the size of the battery pack 100, and the prevention of a decrease in the capacity of the bare cell 210. Specifically, since the recesses are implemented to correspond to the respective solder portions 253, the top case 230 can be aligned on the bare cell 210 so that the recesses 211 are positioned below the respective solder portions 253 when the top case 230 is mounted to the bare cell 210. Subsequently, a coupling member 240 is inserted into coupling grooves 212 and 232, so that the top case 230 and the bare cell 210 can be easily coupled to each other.

As in the first embodiment, insulating members (not shown) corresponding to insulating member 114 may be inserted into the or each recess.

Although in the above description a solder portion 153, 253 is specifically described, the principles of the invention also apply to other types of connection between the terminals and the protective circuit board (123, 223), for example a welded or mechanically connected portion.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A battery pack (100, 200), comprising:
a bare cell (110, 210);
a protective circuit board (123, 223) mounted to the bare cell; and
a terminal (150, 250) extending through the protective circuit board and having a connection portion (153, 253) where the terminal is connected to the protective circuit board,
wherein the bare cell includes a recess (111, 211) at a position corresponding to the connection portion (153, 253).

2. The battery pack of claim 1, comprising a plurality of terminals (150, 250) each having a corresponding connection portion.

3. The battery pack of claim 2, wherein the recess (111) extends across all of the connection portions.

4. The battery pack of claim 2, wherein the bare cell includes a plurality of recesses (211), each recess corresponding to one of the connection portions.

5. The battery pack of any one of the preceding claims, further comprising an insulating member (114) in the or each recess.

6. The battery pack of any one of the preceding claims, wherein the bare cell comprises a cap plate (115, 215) and the or each recess is formed in the cap plate.

7. The battery pack of claim 6, wherein the depth of the or each recess is about 20% of the thickness of the cap plate.

8. The battery pack of claim 6 or 7, wherein the protection circuit board (123, 223) is spaced apart from the upper surface of the cap plate (115, 215).

9. The battery pack of any one of the preceding claims, further comprising a top case (130, 230) coupled to the bare cell and covering the protective circuit board.

10. The battery pack of claim 9, wherein the or each terminal is exposed through a corresponding opening (131, 231) formed in the top case.

11. The battery pack of claim 9 or 10 when dependent on claim 6, wherein the top case is coupled to the bare cell via coupling members (140, 240) inserted through coupling holes (132, 232) in the ends of the top case, the coupling members engaging with openings (112, 212) in the cap plate (115, 215).

12. The battery pack of any one of the preceding claims, further comprising a vent (113, 213) formed in a side wall of the bare cell.

13. The battery pack of any one of the preceding claims, wherein the connection portion comprises a solder portion.

14. The battery pack of any one of the preceding claims, wherein the connection portion protrudes from the protective circuit board towards the recess.
